(19) Europäisches Patentamt
European Patent Office
Office européen des brevets

(11) **EP 2 363 325 B1**

(12) **EUROPEAN PATENT SPECIFICATION**

(45) Date of publication and mention
of the grant of the patent:
**08.02.2017 Bulletin 2017/06**

(21) Application number: **09833895.7**

(22) Date of filing: **22.12.2009**

(51) Int Cl.:
**B60R 13/08** (2006.01)    **B32B 5/26** (2006.01)
**D21H 27/40** (2006.01)    **G10K 11/16** (2006.01)
**G10K 11/162** (2006.01)    **G10K 11/168** (2006.01)

(86) International application number:
**PCT/JP2009/007146**

(87) International publication number:
**WO 2011/077482 (30.06.2011 Gazette 2011/26)**

(54) **INSULATING MATERIAL AND VEHICULAR INSULATION STRUCTURE**

WÄRMEISOLIERENDES UND SCHALLABSORBIERENDES MATERIAL FÜR DIE
WÄRMEISOLATIONS- UND SCHALLABSORPTIONSSTRUKTUR EINER FAHRZEUGKAROSSERIE

MATÉRIAU D'ISOLATION ET STRUCTURE D'ISOLATION DE VÉHICULE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**07.09.2011 Bulletin 2011/36**

(73) Proprietor: **NAGOYA OILCHEMICAL CO., LTD.
Tokai-shi, Aichi 476 (JP)**

(72) Inventors:
• **OGAWA, Masanori
Tokai-shi, Aichi 476 (JP)**
• **FUJII, Makoto
Tokai-shi, Aichi 476 (JP)**

(74) Representative: **Vossius & Partner
Patentanwälte Rechtsanwälte mbB
Siebertstrasse 3
81675 München (DE)**

(56) References cited:
**JP-A- 10 254 452**    **JP-A- 10 254 452**
**JP-A- 2000 085 085**    **JP-A- 2006 069 256**
**JP-A- 2009 214 871**    **JP-A- 2009 214 871**
**US-A1- 2003 143 367**

## Description

FIELD OF THE INVENTION

The present invention relates particularly to a heat-insulating and sound absorbing material used in a vehicle such as a car, and the heat-insulating and sound absorbing structure of a vehicle using said heat-insulating and sound absorbing material.

BACKGROUND OF THE INVENTION

Up to now, a structure consisting of a microporous rigid layer and a porous resilient layer has been provided as a heat-insulating and sound absorbing material, wherein said micro-porous rigid layer has a total air-flow resistance $R_t$ in the range of between 500 and 2500Nsm$^{-3}$, a mass per unit area $m_F$ in the range of between 0.3 and 2.0kg/m$^2$.

In a case where said heat-insulating and sound absorbing material comes into contact with the surface of a car body panel, an air layer having a thickness of about 0.2mm is formed between said heat-insulating and sound absorbing material and the surface of said car body panel, and the resulting structure has a light weight, with a good heat-insulating and sound absorbing performance coming from said air layer.

PRIOR TECHNICAL LITERATURE

Patent Literature 1: Tokuhyo2000-516175
Patent Literature 2: Tokkaihei7-152384

Document JP2009-214871A discloses a heat insulating and sound absorbing material including a rigid layer, a creped paper layer and an air-permeable layer.

Documents JP2006-069256A and JP10-254452A disclose respectively different arrangements for the outer layers and for the inner layer.

OUTLINE OF THE INVENTION

PROBLEMS TO BE SOLVED BY THE INVENTION

In said prior art, the total air-flow resistance Rt of said rigid layer should be set to be in the range of between 500 and 2500Nsm$^{-3}$. In this case, for instance, where said rigid layer is a fiber layer, said fiber layer should be highly compressed, or in a case where said rigid layer is a synthetic resin foam, its expansion ratio should be adjusted to set the total air-flow resistance Rt to be in said range. Nevertheless, it is very difficult to adjust accurately the total air-flow resistance Rt by the compression degree or the expansion ratio. Further to secure a desirable total air-flow resistance, it is necessary to increase the thickness of said rigid layer, which creates a problem in that the weight of said rigid layer will be increased.

Further, in a case where said heat insulating and sound absorbing material comes into contact with the surface of a car body panel, the surface of said heat insulating and sound absorbing material that contacts the surface of said car body panel should be uneven, so as to form an air layer between said heat insulating and sound absorbing material and said car panel, and said uneven surface of said heat insulating and sound absorbing material obstructs the close adhesion between said heat insulating and sound absorbing material and said car body panel.

[MEANS TO SOLVE SAID PROBLEMS]

As a means to solve said problems, the present invention provides a heat insulating and sound absorbing material 1, 11, 21, 31 as claimed in claim 1.

Usually an air-permeable decorative layer is set on said air-permeable rigid layer 2, and the surface of said air-permeable resilient layer which comes into contact with said car body panel 6 is preferably set to be flat and smooth.

Still further, the surface of said air-permeable resilient layer which comes into contact with said car body panel 6 may be covered with a friction sheet 7.

EFFECT OF THE INVENTION

[ACTION]

Said pulp fiber layer which composes said air-flow controlling layer 4 contains at least 90% by mass of a porous pulp fiber which is beaten or refined at a beating or refining degree in the range of between 350 and 650 ml as Canadian Standard Freeness (CSF) provided by JIS P 8121-1995-4, each fiber having a large number of open surface micropores, and said pulp fiber layer 4a has a degree of creping in the range of between 10 and 50%. Since said porous pulp fiber is fine, having a thickness in the range of between 5 and 100$\mu$m, and fiber itself becomes porous, and has a nappy piled surface, said pulp fiber layer 4a has a high air-flow resistance preferable for sound absorbing performance even if said pulp fiber layer is not thick and is lightweight.

Nevertheless, in a case where pulp fiber having a beating or refining degree of beyond 650 ml (CSF) is used in said pulp fiber layer 4a, said pulp fiber will be insufficiently perforated to reduce its porosity, resulting in the heat-insulating and sound absorbing performance of said heat-insulating and sound absorbing material of the present invention being insufficient, while in a case where pulp fiber having, a heating or refining degree of below 350 ml (CSF), the volume of extremely thin fibers increases, making the air-flow resistance of said pulp fiber layer 4a too high, resulting in the heat-insulating and sound absorbing performance of said heat insulating and sound absorbing material of the present invention being insufficient.

Further, since said pulp fiber layer 4a is processed so as to have a degree of creping in the range of between 10 and 50%, said heat-insulating and sound absorbing material has further improved sound absorbing performance, as well as high expansion and contraction properties so that said heat-insulating and sound absorbing material can be deep draw molded.

Nevertheless, in a case where the degree of creping of said fiber layer is below 10%, its air-flow resistance will become excessive, making the improvement of its sound absorbing performance through creping unremarkable and the expansion and contraction properties becoming insufficient, the resulting heat-insulating and sound absorbing material being difficult to deep draw mold, while in a case where the degree of creping is over 50%, the air-flow resistance of said heat-insulating and sound absorbing material will be too low, resulting in the deterioration of its sound absorbing rate.

In a case where said pulp fiber layer 4a or said laminated layer of said pulp layer 4a and said nonwoven fabric 4b is placed between said air-permeable rigid layer 2 and said air-permeable resilient layer 3, the air-flow resistance is easily adjusted to a desirable air-flow-resistance value without increasing the compression rate or expansion ratio or thickness of said air-permeable rigid layer 2, so that even if the mass per unit area of said pulp fiber layer 4a is set to be in the range between 10 and 150g/m$^2$, and the thickness of said pulp fiber layer 4a is set to be in the range of between 0.08 and 0.30mm, the air-flow resistance can easily be set to be in the range of between 0.07 and 3.00 kPa·s/m, with said pulp fiber layer having a mass per unit area and a thickness in the aforementioned range, giving said heat-insulating and sound absorbing material an excellent sound absorbing performance.

Accordingly, in the present invention, even if the surface of said heat-insulating and sound absorbing material 1, 11, 21, 31 coming into contact with said car body panel 6 is set to be flat and smooth, so as not to form an air layer between said heat-insulating and sound absorbing material 1, 11, 21, 31 and the car body panel 6, so as to attempt a close adhesion between said heat-insulating and sound absorbing material and car body panel, an excellent heat-insulating and sound absorbing performance of said heat-insulating and sound absorbing material is displayed.

In said heat-insulating and sound absorbing material 1, 11, 21, 31 of the present invention, the surface of said air-permeable resilient layer 3 which comes into contact with said car body panel 6 may be covered with a friction sheet, to promote evenness and adhesion.

[EFFECT]

Said heat-insulating and sound absorbing material of the present invention is lightweight and has an excellent heat-insulating and sound absorbing performance.

BRIEF DESCRIPTION OF THE DRAWINGS

Fig.1: An illustration showing how to measure air-flow resistance R.
Fig.2: A partial side sectional view of the basic structure of the heat-insulating and sound absorbing material of the present invention.
Fig.3: A partial side sectional view of a heat-insulating and sound absorbing material the surface of which is covered with a friction sheet.

Fig.4: A partial side sectional view of a heat-insulating and sound absorbing material wherein an air-permeable decorative layer is arranged on the air-permeable rigid layer of said heat-insulating and sound absorbing material.

Fig.5: A partial side sectional view of a heat-insulating and sound absorbing material wherein said laminated layer of said pulp fiber layer and said nonwoven fabric is used as an air-flow controlling layer.

Fig.6: An illustration showing how to measure the flexural strength.

Fig.7: A graph showing the relationship between the frequency and sound absorbing rate regarding sample (1-1) of COMPARISON 1 and sample (A-1) of EXAMPLE 1.

Fig.8: A graph showing the relationship between the frequency and sound absorbing rate regarding sample (1-1) of COMPARISON 1, sample (2-1) of COMPARISON 2 and sample (B-1) of EXAMPLE 2.

Fig.9: A graph showing the relationship between the frequency and sound absorbing rate regarding sample (2-1) of COMPARISON 2, sample (3-1) of COMPARISON 3 and sample (C-1) of EXAMPLE 3.

Fig.10: A graph showing the relationship between the frequency and sound absorbing rate regarding the sample (3-1) of COMPARISON 3, sample (4-1) of COMPARISON 4 and sample (D-1) of EXAMPLE 4.

PREFEREED EMBODIMENT TO PRACTICE THE INVENTION

Detailed description of the present invention is as follows.

[Air-permeable rigid layer]

A heat-insulating and sound absorbing material of the present invention mainly comprises an air-permeable rigid layer and air-permeable resilient layer, and said air-permeable rigid layer consists of a fiber layer or a foamed plastic.

(Fiber layer)

The fiber used in said fiber layer includes, for instance, a synthetic fiber such as polyester fiber, polyethylene fiber, polypropylene fiber, polyamide fiber, acrylic fiber, urethane fiber, polyvinyl chloride fiber, polyvinylidene chloride fiber, acetate fiber, or the like, a biodegradable fiber made of starch extract from a plant such as corn, sugarcane, or the like, a natural fiber such as pulp, cotton, palm fiber, hemp fiber, bamboo fiber, kenaf fiber, or the like, an inorganic fiber such as glass fiber, carbon fiber, ceramic fiber, asbestos fiber, or the like, a reclaimed fiber obtained by the defibrating of scraps of the fiber product made of said fiber, or the like, and said fiber is used singly or two or more kinds of fiber may used in said fiber aggregate, and for instance, a fiber such as an inorganic fiber such as glass fiber, carbon fiber, ceramic fiber, asbestos fiber, stainless fiber, or the like, an aramid fiber such as poly (m-phenylene isophthalamide) fiber, poly (p-phenylene terephthalamide) fiber, or the like, a polyarylate fiber, polyetheretherketone fiber, polyphenylene sulfide, or the like may be used.

If desired, said fiber layer may be needle punched to intertwine said fibers together.

Further instead of said fibers or together with said fibers, a thermoplastic fiber having a low melting point of below 180°C may be partially or wholly used as said fiber.

Said thermoplastic fiber having a low melting point of below 180°C includes such as polyolefin group fibers like polyethylene, polypropylene, ethylene-vinyl acetate copolymer, ethylene-ethyl acrylate copolymer, or the like, polyvinyl chloride fiber, polyurethane fiber, polyester fiber, copolymerized polyester fiber, polyamide fiber, copolymerized polyamide fiber, or the like. Said low melting point thermoplastic fiber may be used singly, or two or more kinds of said low melting point thermoplastic fiber may be used together. The fineness of said low melting point thermoplastic fiber is preferably in the range of between 0.1 and 60 dtex. In the present invention, a core-sheath type composite fiber is preferably used, wherein an ordinary fiber is the core component, and a thermoplastic resin having a low melting point in the range of between 100 and 180 °C is the sheath component. In a case where said core-sheath type composite fiber is used as the fiber for said fiber sheet, the rigidity and heat resistance of said air-permeable rigid layer does not degrade.

(Foamed plastic)

The foamed plastic used as said air-permeable rigid layer includes air permeable foamed resin such as air permeable foamed polyurethane, air permeable foamed polyethylene, air permeable foamed polypropylene, air permeable foamed polystyrene, air permeable foamed phenol resin, air permeable foamed melamine resin, and the like.

Said air-permeable rigid layer preferably has an air-flow resistance in the range of between 0.2 and 3.00 kPa·s/m, a mass per unit area in the range of between 0.3 and 2.0 kg/m$^2$, more preferably 0.5 and 1.6 kg/m$^2$, a flexural strength in the range of between 0.05 and 5.00N/25mm, more preferably 0.10 and 3.00N/25mm.

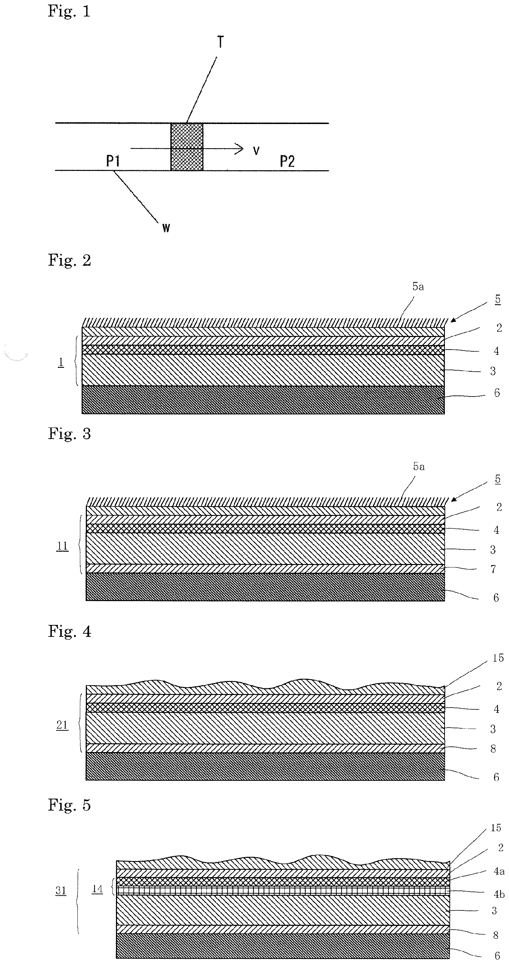

Said air-flow resistance R (Pa·s/m) is a barometer expressing the air-permeable material's degree of permeability. To measure said air-flow resistance R, the steady flow differential-pressure measuring method may be applied. As shown in Fig. 1, a test piece T is arranged in a cylindrical duct W, then air is blown into said duct at a constant flow V as shown by the arrow, to measure the difference in pressure between said duct's inlet side P1, and outlet side P2. The air-flow resistance is calculated using the following formula.

$$R=\Delta P/V$$

Wherein ΔP is the difference in pressure Pa(ΔP=P1-P2), and V represents the volume of airflow in said unit cross section area of said duct ($m^3/m^2$·S).

Said air-flow resistance can be measured with such as the air-flow tester (Trade Name: KES-F8-AP1, KATO TECH CO., LTD. The steady flow differential pressure measuring method).

To adjust the air-flow resistance, mass per unit area, and flexural strength of said air-permeable rigid layer, in the case of a fiber layer, the compressibility ratio and/or the amount of the synthetic resin impregnated or the like may be adjusted, and in the case of a foamed plastic, the hardness of the synthetic resin which comprises the material of said foamed plastic, and/or the expansion ratio, or the like may be adjusted.

The thickness of said air-permeable rigid layer is commonly set to be in the range of between 3.0 and 10.0mm, considering its flexural strength, moldability, or heat-insulating and sound absorbing performance.

(Air-permeable resilient layer)

As the material of said air-permeable resilient layer of the present invention, the same fiber layer or foamed plastic as used in said air-permeable rigid layer may be used. However, the density ρ of said air-permeable resilient layer is set to be below 400kg/$m^3$, preferably below 200kg/$m^3$, with the thickness of said air-permeable resilient layer being set to be in the range of between about 5 and 20mm, the mass per unit area of said air-permeable resilient layer being set to be in the range of between about 0.2, and 2.0kg/$m^2$, and the air-flow resistance of said air-permeable resilient layer is set to be in the range of between 0.20 and 3.00 kPa·s/m, to secure its resilientity (Cushion property).

(Synthetic resin)

If desired, a synthetic resin may be impregnated into said air-permeable rigid layer and/or air-permeable resilient layer, to improve the rigidity of said air-permeable rigid layer and/or said air-permeable resilient layer. As said synthetic resin to be impregnated, thermoplastic resin and/or thermosetting resin may be illustrated.

Said thermoplastic resin is, for instance, an acrylate resin, methacrylate resin, ionomer resin, ethylene-ethyl acrylate (EEA) resin, copolymerized acrylonitrile-styrene-acrylic rubber (ASA) resin, copolymerized acrylonitrile-styrene (AS) resin, copolymerized acrylonitrile-chlorinated polyethylene-styrene (ACS) resin, copolymerized ethylene-vinyl acetate (EVA) resin, copolymerized ethylene-vinyl alcohol (EVOH) resin, polymethylmethacrylate resin (PMMA), polybutadiene (BDR), polystyrene (PS), polyethylene (PE), copolymerized acrylonitrile-butadiene-styrene (ABS) resin, chlorinated polyethylene (CPE), polyvinyl chloride (PVC), polyvinylidene chloride (PVDC), polypropylene (PP), cellulose acetate (CA) resin, syndiotactic polystyrene (SPS), polyoxymethylene (=polyacetal) (POM), polyamide (PA), polyimide (PI), polyamide imide (PAI), polyether imide (PEI), polyarylate (PAR), thermoplastic polyurethane (TPU) elastomer, thermoplastic elastomer (TPE), liquid crystal polymer (LCP), polyether ether ketone (PEEK), polysulfone (PSF), polyether sulfone (PES), fluorocarbon polymer, polytetrafluoroethylene (PTFE), polyethylene terephthalate (PET), polycarbonate (PC), polyphenylene ether (PPE), modified PPE, polyphenylene sulfide (PPS), polybutylene terephthalate (PBT), polybenzimidazole (PBI), wholly aromatic polyester (POB), or the like. Said thermoplastic resin provides a thermoplastic sheet having an excellent retention of the molded shape, and good rigidity when said thermoplastic resin is impregnated in and/or coated on and/or mixed in to said air-permeable rigid layer and/or air-permeable resilient layer.

Two or more kinds of said thermoplastic resin may be mixed and used together, and one or more kinds of thermosetting resin may be used together with said thermoplastic resin in a small amount so as not to hinder the thermoplasticity of said thermoplastic resin. Said thermoplastic resin is preferably provided as an aqueous solution, aqueous emulsion, or aqueous dispersion for handling, or for procedures such as impregnating, coating or the like, and may also be provided as an organic solvent solution.

Said thermosetting resin may be such as a urethane resin, melamine resin, thermosetting acrylic resin, especially a thermosetting acrylic resin which is formed into an ester bond and stiffened by heating, a urea resin, phenol resin, epoxy resin, thermosetting polyester, or the like, and further a synthetic resin precursor utilized to produce said synthetic resin may be also used. Said synthetic resin precursor may include such as a prepolymer, oligomer, and monomer such as urethane resin prepolymer, urea resin prepolymer (precondensation polymer), phenol group resin prepolymer (precondensation polymer), diallyl phthalate prepolymer, acrylic oligomer, polyatomic isocyanate, methacrylic ester monomer, diallyl phthalate monomer, or the like. For easy handling, said thermosetting resin is preferably provided as an aqueous solution, aqueous emulsion, or aqueous dispersion, and may also be provided as an organic solvent solution.

Two or more kinds of said thermosetting resin or synthetic resin precursor may be mixed and used together,

The addition of said synthetic resin, especially said thermosetting resin, improves the retention of the molded shape, and rigidity of said air-permeable rigid layer and air-permeable resilient layer.

A phenol group resin is an especially preferable synthetic resin in the present invention.

Said phenol group resin is produced by the condensation of a phenol group compound, and formaldehyde and/or a formaldehyde donor.

The phenol group compound used to produce said phenol group resin may be a monohydric phenol, or polyhydric phenol, or a mixture of monohydric phenol and polyhydric phenol, but in a case where only a monohydric phenol is used, formaldehyde is apt to be emitted when or after said resin composition is cured, making polyphenol or a mixture of monophenol and polyphenol most desirable.

Into said synthetic resin or synthetic resin precursor used in the present invention, further, the following substance may be added or mixed. Said substance includes, for instance, an inorganic filler, such as calcium carbonate, magnesium carbonate, barium sulfate, calcium sulfate, calcium sulfite, calcium phosphate, calcium hydroxide, magnesium hydroxide, aluminium hydroxide, magnesium oxide, titanium oxide, iron oxide, zinc oxide, alumina, silica, colloidal silica, diatomaceous earth, dolomite, gypsum, talc, clay, asbestos, mica, calcium silicate, bentonite, white carbon, carbon black, iron powder, aluminum powder, glass powder, stone powder, blast furnace slag, fly ash, cement, zirconia powder, or the like ; a natural rubber or its derivative ; a synthetic rubber such as styrene-butadiene rubber, acrylonitrile-butadiene rubber, chloroprene rubber, ethylene-propylene rubber, isoprene rubber, isoprene-isobutylene rubber, or the like ; a water-soluble macromolecule and natural gum such as polyvinyl alcohol, sodium alginate, starch, starch derivative, glue, gelatin, powdered blood, methyl cellulose, carboxy methyl cellulose, hydroxy ethyl cellulose, polyacrylate, polyacrylamide, or the like; an organic filler such as, wood flour, walnut powder, coconut shell flour, wheat flour, rice flour, or the like; a higher fatty acid such as stearic acid, palmitic acid, or the like; a fatty alcohol such as palmityl alcohol, stearyl alcohol, or the like ; a fatty acid ester such as butyryl stearate, glycerin mono stearate, or the like; a fatty acid amide ; a natural wax or composition wax such as carnauba wax, or the like; a mold release agent such as paraffin, paraffin oil, silicone oil, silicone resin, fluorocarbon polymers, polyvinyl alcohol, grease, or the like; an organic blowing agent such as azodicarbonamido, dinitroso pentamethylene tetramine, p,p'-oxibis(benzene sulfonylhydrazide), azobis-2,2'-(2-methylpropionitrile), or the like; an inorganic blowing agent such as sodium bicarbonate, potassium bicarbonate, ammonium bicarbonate or the like; hollow particles such as shirasu balloon, perlite, glass balloon, plastic foaming glass, hollow ceramics, or the like; foaming bodies or particles such as foaming polyethylene, foaming polystyrene, foaming polypropylene, or the like; a pigment; dye; antioxidant; antistatic agent; crystallizer; a flame retardant such as phosphorus group compound, nitrogen group compound, sulfur group compound, boron group compound, bromine group compound, guanidine group compound, phosphate group compound, phosphoric ester group compound, amine group resin, or the like; flameproofing agent; water-repellent agent; oil-repellent agent; insecticide agent; preservative; wax; surfactant; lubricant; antioxidant; ultraviolet absorber; a plasticizer such as phthalic ester (ex. dibutyl phthalate(DBP), dioctyl phthalate(DOP), dicyclohexyl phthalate) and others(ex. tricresyl phosphate).

A water and oil repellant agent includes such as natural wax, synthetic wax, fluorocarbon resin, silicon group resin, or the like.

(Air-flow resistance controlling layer)

Said air-flow resistance controlling layer used in the present invention consists of a pulp fiber layer or a laminated layer of said pulp fiber layer and a nonwoven fabric used as a reinforcing layer of said pulp fiber layer.

(Pulp fiber layer)

The pulp fiber used for said pulp fiber layer is a wood pulp and/or non wood pulp, usually broadleaf tree chip and conifer chip are used as a raw material, and can be mechanically, chemically, and semi chemically pulped, and preferably said pulp fiber is porous pulp fiber which is beaten or refined at a beating or refining degree in the range of between 350 and 650ml as Canadian Standard Freeness(CSF) provided by JIS P8121-1995-4.

Said beating or refinement is usually done with a conical refiner, disk refiner, or the like.

The average length of said porous pulp fiber is preferably between 0.2 and 30mm, with its major axis preferably being between 5 and 100$\mu$m. When the average length of said porous pulp fiber is less than 0.2mm, since the fibers in said pulp fiber layer are insufficiently intertwined with each other, the strength of said air-flow resistance controlling layer, that is said pulp fiber layer, decrease. When the average length of said porous pulp fiber is more than 30mm, it becomes easy for the fiber to twine with each other like the string ball, making the stratifying of said fiber difficult. Further, when the major axis of said fiber is less than 5μm, the density of said air-flow resistance controlling layer that is said pulp fiber layer becomes excessive, and the strength of said air-flow resistance controlling layer, that is said pulp fiber layer, decreases. When the major axis of said fiber is more than 100μm, the rigidity of said fiber rises and the intertwining between fibers becomes difficult.

Two or more kinds of said porous pulp fiber may be mixed and used together, and may also be mixed and used with normal pulp fiber, natural fiber and/or synthetic fiber that hasn't been previously used in said air-permeable rigid layer and air-permeable resilient layer. Further, it is necessary to include said porous pulp fiber, in its mixture ratio in this case, more than 90% by mass, preferably more than 95% by mass, most preferably 100% by mass.

If desired, crepe like wrinkles (wrinkles that are uneven) can be formed on the surface of said pulp fiber layer to control its air-flow resistance, giving said pulp fiber layer flexibility and improved moldability.

Said crepe processing includes the wet creping process, wherein for wrinkling a wet fiber sheet is compressed longitudinally (in the sheeting direction) with a press roll, doctor blade, or the like, and the dry creping process, wherein for wrinkling the fiber sheet is dried with a Yankee drier or calendar, after which the resulting dried fiber sheet is compressed longitudinally with a doctor blade or the like. For instance, the degree of creping of said fiber sheet, is set to be in the range of between 10 and 50 %.

Herein said degree of creping is defined by the following formula.

$$\text{Degree of creping (\%)} = (A/B) \times 100,$$

wherein A is the length of said fiber sheet before creping process, and B is the length of said fiber sheet after creping process.

In other words, said degree of creping is the longitudinal (in the sheeting direction) degree of compression of the fiber sheet (See Tokkai 2002-327399, Tokuhyouhei 10-510886).

In a case where the degree of creping is below 10 %, the sound absorbing performance of said creped fiber sheet will not improve sufficiently, and the stretchability of said creped fiber sheet will become inadequate so that said creped fiber sheet having a degree of creping below 10 % will have difficulty being deep draw molded. On the other hand, said creped fiber sheet having a degree of creping beyond 50 % has too little an air-flow resistance, resulting in poor sound absorbing performance.

In addition, the mass for each unit area of the above-mentioned pulp fiber layer is set to be between 10 and 50g/m$^2$, its thickness being set to be between 0.08 and 0.30mm in consideration of its air-flow resistance, which affects its sound absorbing performance.

(Nonwoven fabric)

A nonwoven fabric may be laminated onto said pulp fiber layer to reinforce said pulp fiber layer. As said nonwoven fabric, commonly a nonwoven fabric containing the needle punched fleece of natural fiber and/or synthetic fiber is used, the mass per unit area being commonly set to be in the range of between 15 and 150g/m$^2$.

The air-flow resistance of said air-flow resistance controlling layer, consisting of said pulp fiber layer or said laminated layer of said pulp-fiber layer and said nonwoven fabric is set to be in the range of between 0.07 and 3.00 kPa·s/m. In a case where said air-flow resistance is below 0.07 kPa·s/m, the density of said air-flow resistance controlling layer will become far too low, and as a result, the strength and rigidity of said air-flow resistance controlling layer may deteriorate. Further, in a case where said air-flow resistance is beyond 3.00 kPa·s/m, the density of said air-flow resistance controlling layer will become far too high, and as a result, the sound absorbing performance of said heat insulating and sound absorbing material may become insufficient.

(Friction sheet)

As said friction sheet which covers the surface of said heat insulating and sound absorbing material which comes into contact with the surface of the car body panel, a soft plastic sheet such as plasticized polyvinyl chloride sheet, plasticized ethylene vinyl acetate copolymer sheet, plasticized polyester sheet, polyethylene sheet, or the like, a sheet of a rubber such as styrene-butadiene rubber, acrylonitrile-butadiene rubber, butyl rubber, isoprene rubber, chloroprene rubber, ethylene-propylene rubber, acrylic rubber, urethane rubber, natural rubber, or the like, a sheet of a styrenic elastomer such as styrene-chloroprene (SCR) rubber, styrene-butadiene-styrene (SBS) copolymer, styrene-isoprene-styrene (SIS) copolymer, styrene-hydrogenation polyolefin-styrene (SEBS) copolymer, or the like, a sheet of a bitumen such as asphalt, pitch or the like, or a sheet of a mixture of said rubber or said elastomer and said bitumen may be illustrated. The thickness of said friction sheet is set to be in the range about 20 and 300 μm.

(Heat insulating and sound absorbing material)

An embodiment of the basic structure of said heat insulating and sound absorbing material of the present invention is shown in Fig.2. As shown in Fig.2, a heat insulating and sound absorbing material 1 consists of an air-permeable rigid layer 2, an air-permeable resilient layer 3, and an air-flow resistance controlling layer 4 lying between said air-permeable rigid layer 2 and said air-permeable resilient layer 3. Said heat insulating and sound absorbing material 1 is used as a flooring for a car, and an air-permeable decorative layer 5 which is a carpet having a nappy piled layer on the surface of said carpet is arranged on the surface of said heat insulating and sound absorbing material. To ensure close adhesion between said heat insulating and sound absorbing material 1 and the car body panel 6, the surface of said air-permeable resilient layer 3 which comes into contact with the surface of the car body 6 is set to be flat and smooth.

Each of the aforementioned layer is bonded together through an air-permeable adhesive layer, for instance, a scattered hotmelt adhesive powder layer or a hotmelt adhesive fiber web. Said hotmelt adhesive is such as a low melting point polyamide, low melting point ethylene-vinylacetate copolymer, low melting point polyester or the like.

In a case where a synthetic resin is impregnated into said air-permeable rigid layer 2 and/or said air-permeable resilient layer 3, each layer may be bonded together by said synthetic resin impregnated into each layer.

Besides said basic structure of said heat insulating and sound absorbing material, in the case of the embodiment shown in Fig.3 a friction sheet 7 is stuck to the surface of said heat insulating and sound absorbing material 11 which comes into contact with the car body panel 6. To stick said friction sheet 7 to the surface of said heat insulating and sound absorbing material 11, a hotmelt adhesive is used or melting bonding is applied.

Fig.4 shows a heat insulating and sound absorbing material 21 used as a head lining and door trim for a car. An air-permeable decorative layer 15 is arranged on the surface of said heat insulating and sound absorbing material 21 as a surface layer, and a carrier layer 8 is arranged on the surface of said heat insulating and sound absorbing material 21 which comes into contact with the roof panel 6 which is a car body panel. The role of said carrier layer 8 is to reinforce said heat insulating and sound absorbing material of the present invention, said carrier layer 8 being a highly compressed fiber layer or a panel having a honey comb structure. As said air-flow resistance controlling layer 4, a pulp fiber layer may be used and further, a heat insulating and sound absorbing material 31 may be equipped with an air-flow resistance controlling layer 14 wherein a nowoven fabric 4b is laminated onto the back of said pulp fiber layer 4a as shown in Fig.5.

(Flame retardant)

A flame retardant may be added to said air-permeable rigid layer 2, said air-permeable resilient layer 3, said air-flow resistance controlling layers 4 and 14, said friction sheet 7 and the like. Said flame retardant is, for instance, such as flame retardant containing phosphorus, flame retardant containing nitrogen, flame retardant containing sulfur, flame retardant containing boron, flame retardant containing bromine, guanidine group flame retardant, phosphate group flame retardant, phosphoric ester flame retardant, amine resin group flame retardant, expandable graphite, or the like.

A powdery flame retardant, which is insoluble or difficult to dissolve in water, is especially advantageously used in the present invention.

Said powdery flame retardant, which is water insoluble or difficult to dissolve in water, imparts a flame retardancy having excellent water resistance and durability to said sound absorbing material. In particular, since said air-permeable rigid layer 2, air-permeable resilient layer 3, air-flow resistance controlling layers 4 and 14, friction sheet 7 of the present invention each have a porous structure, said powdery solid flame retardant can smoothly permeate said layers and sheet, to give them high flame retardancy to non-flamability.

To describe the present invention further and concretely, the following examples are illustrated, but said examples do not limit the scope of the present invention.

[EXAMPLE]

(Air-permeable rigid layer)

A web consisting of 30% by mass of a polyester fiber having a low melting point (melting point: 130°C) and 70% by mass of a reclaimed polyester fiber was heated at 180°C, to melt said low melting point polyester fiber, after which said heated web was then cooled. Five kinds of air-permeable rigid layer samples were prepared. Said five samples were as follows.

Sample (1) thickness : 5mm, mass per unit area: 400g/m$^2$, flexural strength: 0.06N/25mm, air-flow resistance 0.25 kPa·s/m, Sample (2) thickness: 5mm, mass per unit area 600g/m$^2$, flexural strength: 0.28N/25mm, air-flow resistance: 0.36 kPa·s/m, Sample (3) thickness: 5mm, mass per unit area: 800g/m$^2$, flexural strength: 1.03n/25mm, air-flow resistance: 0.75 kPa·s/m, Sample (4) thickness : 5mm, mass per unit area: 1200g/m$^2$, flexural strength: 2.04N/25mm, air-flow resistance, 1.42 kPa·s/m, Sample (5) thickness : 5mm, mass per unit area: 1800g/m$^2$.flexural strength: 4.18N/25mm, air-flow resistance: 2.72 kPa·s/m.

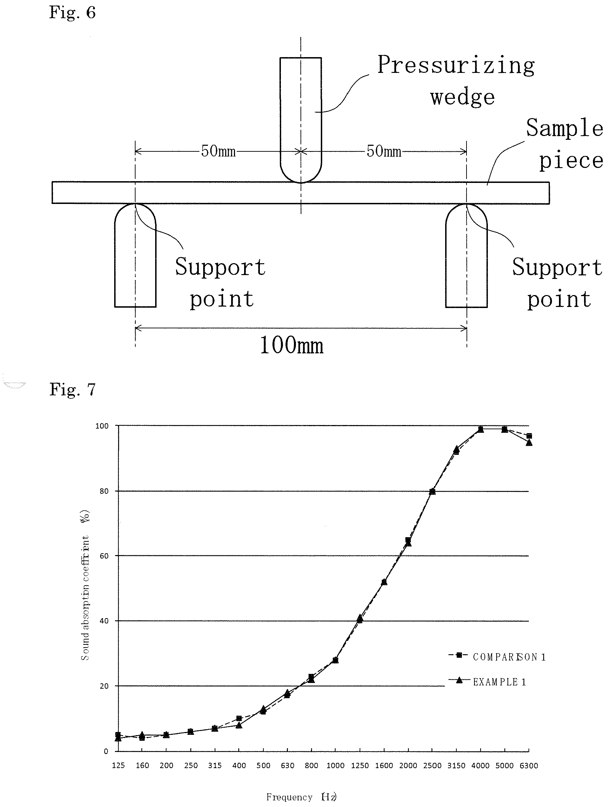

Wherein, as shown in Fig.6, the flexural strength was measured using a test piece measuring 25mm $\times$ 150mm, and the flexion test machine having been set at a compression speed of 20mm/min to make load-flexion curve, with the value of the load at its primary peak being recognized as the flexural strength.

(Air permeable resilient layer)

A polyester fiber web into which 30% by mass of a low melting point polyester fiber (melting point: 160°C) was mixed was heated at 180°C to melt said low melting point polyester fiber, after which said heated web was then cooled, to prepare an air-permeable resilient layer sample (6) having a thickness of 10mm and a mass per unit area of 200g/m$^2$.

(Air-flow resistance controlling layer)

A woody pulp mixture containing 70% by mass of a conifier pulp and 30% by mass of a broad-leaved tree pulp was used as the material and said woody pulp mixture was refined with a discrefiner to a refining degree of 480ml, as Canadian Standard Freeness (CFS) provided by JIS P8121-1995-4, and said refined woody pulp mixture was prepared by dry crepe processing with an ordinary Yankee papering machine system, to prepare a pulp fiber sheet with a creping degree of 20%. Hollowing this, four kinds of said air-flow resistance controlling layer sample were prepared from said pulp fiber sheet. Sample (A) had a mass per unit area: 18g/m$^2$, thickness: 0.13mm, and air-flow resistance: 0.166 kPa·s/m, Sample (B) had a mass per unit area: 20g/m$^2$, thickness: 0.13mm, and air-flow resistance: 0.332 kPa·s/m, Sample C had a mass per the unit area: 23g/m$^2$, the thickness: 0.14mm, and air-flow resistance: 0.67 kPa·s/m, Sample (D) had a mass per the unit area: 26g/m$^2$, thickness: 0.15mm, and air-flow resistance 1.24 kPa·s/m.

[EXAMPLE 1]

Said air-permeable rigid layer, sample (1) was used in EXAMPLE 1 and a polyester hotmelt adhesive powder (particle size: 200 to 300$\mu$m, softening point: 160°C) was scattered onto the one side of Sample (1) in an amount of 3g/m$^2$. Said air-flow resistance controlling layer sample (A) was used in EXAMPLE 1 and said sample (A) was put onto said scattered hot melt adhesive powder layer side of said sample (1), and then a heat roll heated to be 150°C was lightly pressed onto said sample (A) side, to bond said air-permeable rigid layer sample (1) and said air-flow resistance controlling layer sample (A), to prepare a laminated layer.

A polyester hotmelt adhesive powder (particle size: 200 to 300$\mu$m, softening point: 120°C) was scattered onto said air-flow resistance controlling layer of said laminated layer in an amount of 3g/m$^2$, and then said scattered hotmelt adhesive layer side of said laminated layer was heated with an infraredray heater, so that its surface temperature would reach about 150°C, to melt said hotmelt adhesive.

Said air-permeable resilient layer sample (6) was used in EXAMPLE 1 and said sample (6) was put onto said air-flow resistance controlling layer sample (A) of said laminated sheet by pressing to adhere together, to prepare a heat insulating-sound absorbing material sample (A-1), having a thickness of 15mm and a air-flow resistance of 0.45 kPa·s/m.

[EXAMPLE 2]

A heat insulating and sound absorbing material sample (B-1) having a thickness of 15mm and a air-flow resistance of 0.73 kPa·s/m was prepared in the same manner as in EXAMPLE 1, with the exception that sample (2) as said air-permeable rigid layer, and sample (B) as said air-flow resistance controlling layer, were used respectively.

[EXAMPLE 3]

A heat insulating and sound absorbing material sample (C-1) having a thickness of 15mm and a air-flow resistance of 1.46 kPa·s/m was prepared in the same manner as in EXAMPLE 1, with the exception that sample (3) as said air-permeable rigid layer, and sample (C) as said air-flow resistance controlling layer, were used respectively.

[EXAMPLE 4]

A heat insulating and sound absorbing material sample (D-1) having a thickness of 15mm and a air-flow resistance of 2.70 kPa·s/m was prepared in the same manner as in EXAMPLE 1 with the exception that sample (4) as said air-permeable rigid layer, and sample (D) as said air-flow resistance controlling layer, were used respectively.

[COMPARISON 1]

A heat insulating and sound absorbing material sample (1-1) was prepared by scattering a hotmelt adhesive powder (particle size: 200 to 300)$\mu$m, softening point: 120°C) onto one side of said air-permeable rigid layer sample (2) in an amount of 3g/m$^2$ in the same manner as in EXAMPLE 1, with the exception that said air-flow resistance controlling layer was omitted, and that said scattered hotmelt adhesive layer side of said of sample (2) was heated with an infrared ray heater, bringing its surface temperature to about 150°C so as to melt said hotmelt adhesive, and putting said air-permeable resilient layer sample (6) thereon, and then pressing it so as to adhere it to said air-permeable rigid layer sample (2), to prepare said heat insulating and sound absorbing material (1-1). Said heat insulating and sound absorbing material (1-1) had a thickness of 15mm and a air-flow resistance of 0.40 kPa·s/m.

[COMPARISON 2]

A heat insulating and sound absorbing material sample (2-1) having a thickness of 15mm and a air-flow resistance of 0.79 kPa·s/m was prepared in the same manner as in COMPARISON 1 with the exception that sample (3) was used as said air-permeable rigid layer.

[COMPARISON 3]

A heat insulating and sound absorbing material (3-1) having a thickness of 15mm and a air-flow resistance of 1.46 kPa·s/m was prepared in the same manner as in COMPARISON 1 with the exception that sample (4) was used as said air-permeable rigid layer.

[COMPARISON 4]

A heat insulating and sound absorbing material sample (4-1) having a thickness of 15mm and a air-flow resistance of 2.75 kPa·s/m was prepared in the same manner as in COMPARISON 1 with the exception that sample (5) was used as said air-permeable rigid layer.

[Sound absorbing performance test]

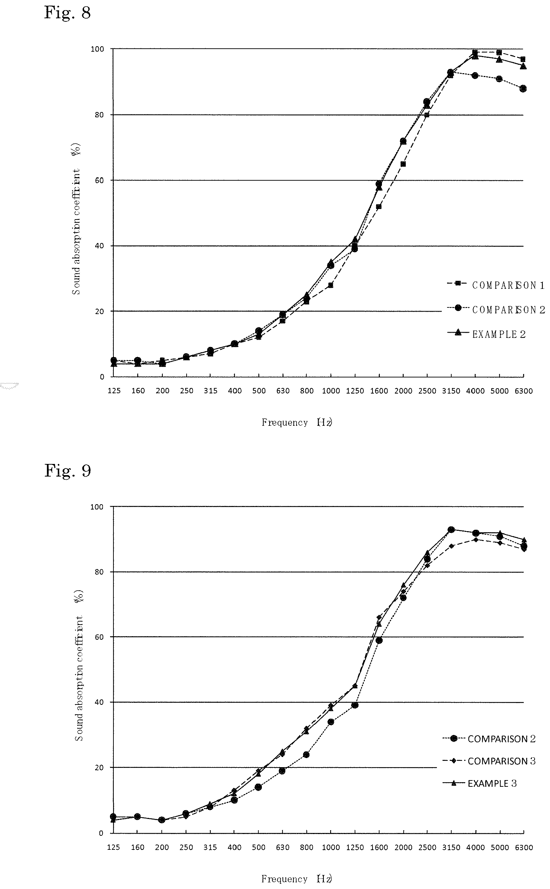

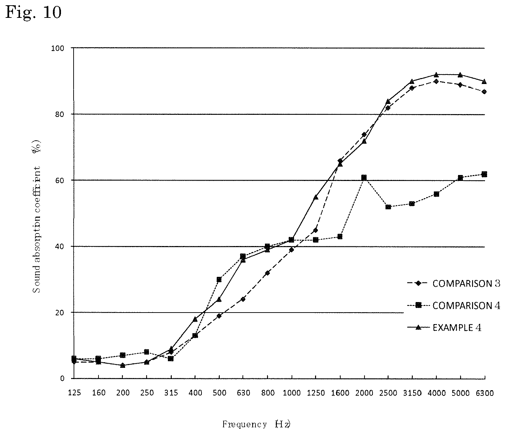

The normal incidence sound absorption coefficients of each heat insulating and sound absorbing material (A-1 to D-1) and (1-1 to 4-1) respectively were measured by a method conforming to the JIS A 1405, the Vertical incidence sound absorbing rate measurement method of a building material using the pipe method, wherein the sound source was arranged in the side of said air-permeable rigid material.
The test results were shown in Table 1 and Figs.7 to 10.

Table 1

| | COMPARISON 1 | EXAMPLE 1 | COMPARISON 2 | EXAMPLE 2 | COMPARISON 3 | EXAMPLE 3 | COMPARISON 4 | EXAMPLE 4 |
|---|---|---|---|---|---|---|---|---|
| Air-permeable rigid layer | (2) | (1) | (3) | (2) | (4) | (3) | (5) | (4) |
| mass per unit area (g/m$^2$) | 600 | 400 | 800 | 600 | 1200 | 800 | 1800 | 1200 |
| thickness (mm) | 5 | 6 | 5 | 6 | 5 | 6 | 5 | 5 |
| flexural strength (N/25mm) | 0.28 | 0.06 | 1.03 | 0.28 | 2D4 | 1.03 | 4.18 | 2.04 |
| air-flow resistance (kPa·s/m) | 0.36 | 0.25 | 0.75 | 0.36 | 1.42 | 0.76 | 2.72 | 1.42 |
| Air-permeable resilient layer | (6) | (6) | (6) | (6) | (6) | (6) | (6) | (6) |
| mass per unit area (g/m$^2$) | 200 | 200 | 200 | 200 | 200 | 200 | 200 | 200 |
| thickness (mm) | 10 | 10 | 10 | 10 | 10 | 10 | 10 | 10 |
| Air-flow resistance controlling layer | - | (A) | - | (B) | - | (C) | - | (D) |
| air-flow resistance (kPa·s/m) | - | 0.166 | - | 0.332 | - | 0.67 | - | 1.24 |
| Heat insulatig and sound absorbing material | (1-1) | (A-1) | (2-1) | (B-1) | (3-1) | (C-1) | (4-1) | (D-1) |
| mass per unit area (g/m$^2$) | 800 | 624 | 1000 | 826 | 1400 | 1029 | 2000 | 1432 |
| thickness (mm) | 15 | 15 | 15 | 15 | 15 | 15 | 15 | 15 |
| Air-flow resistance (kPa·s/m) | 0.40 | 0.45 | 0.79 | 0.73 | 1.46 | 1.46 | 2.75 | 2.70 |

(continued)

| Normal incidence sound absorption coefficient (%) to frequency (Hz) | COMPARISON 1 | EXAMPLE 1 | COMPARISON 2 | EXAMPLE 2 | COMPARISON 3 | EXAMPLE 3 | COMPARISON 4 | EXAMPLE 4 |
|---|---|---|---|---|---|---|---|---|
| 125 | 5 | 4 | 5 | 4 | 5 | 4 | 6 | 6 |
| 160 | 4 | 5 | 5 | 4 | 5 | 6 | 6 | 6 |
| 200 | 5 | 5 | 4 | 4 | 4 | 4 | 7 | 4 |
| 250 | 6 | 6 | 6 | 6 | 5 | 6 | 8 | 6 |
| 315 | 7 | 7 | 8 | 8 | 8 | 9 | 6 | 9 |
| 400 | 10 | 8 | 10 | 10 | 13 | 12 | 13 | 18 |
| 500 | 12 | 13 | 14 | 13 | 19 | 18 | 30 | 24 |
| 630 | 17 | 18 | 19 | 19 | 24 | 26 | 37 | 36 |
| 800 | 23 | 22 | 24 | 25 | 32 | 31 | 40 | 39 |
| 1000 | 28 | 28 | 34 | 35 | 39 | 38 | 42 | 42 |
| 1250 | 40 | 41 | 39 | 42 | 45 | 46 | 42 | 55 |
| 1600 | 52 | 52 | 59 | 68 | 66 | 64 | 43 | 66 |
| 2000 | 65 | 64 | 72 | 72 | 74 | 76 | 61 | 72 |
| 2500 | 80 | 80 | 84 | 83 | 82 | 86 | 52 | 84 |
| 3150 | 92 | 93 | 93 | 93 | 88 | 93 | 53 | 90 |
| 4000 | 99 | 99 | 92 | 98 | 90 | 92 | 56 | 92 |
| 5000 | 99 | 99 | 91 | 97 | 89 | 92 | 61 | 92 |
| 6300 | 97 | 95 | 88 | 96 | 87 | 90 | 62 | 90 |

Referring to Table 1, when comparing said heat insulating and sound absorbing material sample (A-1) of EXAMPLE 1 wiht said heat insulating and sound absorbing material sample (1-1) of COMPARISON 1, it is recognized that in a case where the mass per unit area of said air permeable rigid layer is reduced from 600 to 400g/m$^2$, the resulting heat insulating and sound absorbing material having a mass per unit area of 400/gm$^2$ demonstrates the same sound absorbing performance as said heat insulating and sound absorbing material having a mass per unit area of 600g/m$^2$ by selecting and using said air-flow resistance controlling layer to adjust the air-flow resistance of said heating insulating and sound absorbing material having a mass of unit area of 400g/m$^2$, so as to be equal to the air-flow resistance of said heat insulating and sound absorbing material having a unit mass of 600g/m$^2$.

Comparing said heat insulating and sound absorbing material (B-1) of EXAMPLE 2 with said heat insulating and sound absorbing materials (2-1) and (1-1) of COMPARISONS 2 and 1, in a case where the mass per unit area of said air-permeable rigid layer of said heat insulating and sound absorbing material sample (B-1) is reduced from 800 to 600g/m$^2$, it is recognized that the resulting heat insulating and sound absorbing material has the same sound absorbing performance as that of sample (2-1) of COMPARISON 2.

Further, in a case where the mass per unit area of sample (2-1) is merely reduced to 600g/m$^2$, the same mass as that of sample (B-1) of EXAMPLE 2, the resulting sample will correspond with sample (1-1) of COMAPRISON 1, it is recognized that sample (1-1) has an inferior sound absorbing performance to sample (B-1) which has the same thickness as sample (1-1), because of the difference in their air-flow resistance. The same discussion can be applied to samples (C-1), (3-1), (2-1).

Comparing said heat insulating and sound absorbing material (D-1) of EXAMPLE 4 with said heat insulating and sound absorbing materials (4-1) and (3-1), of COMPARISONS 4 and 3, it is recognized that sample (4-1) of COMPARISON 4 has a superior sound absorbing performance to sample (3-1) being in the frequency range of between 500Hz and 1000Hz because sample (4-1) has a higher mass and density, resulting in a higher air-flow resistance than in sample (3-1) of COMPARISON 3, while sample (4-1) has an inferior sound absorbing performance to sample (3-1) in a high frequency range higher than 1000Hz. It is recognized that sample (D-1) of EXAMPLE 4 has excellent sound absorbing performance in the high frequency range, which is between about 500 and 4000Hz.

Referring to the results of Table 1, in the case of a traditional heat insulating and sound absorbing material consisting of an air-permeable rigid layer and air-permeable resilient layer, and without a air-flow resistance controlling layer, in order to adjust the air-flow resistance, which is one of the most important factors in sound absorbing performance, it is necessary, though admittably the fineness of said fiber has some influence, to adjust the density of said sound absorbing material, the difficulty being in adjusting the air-flow resistance with a fixed thickness.

Said air-flow resistance controlling layer of the present invention is lightweight and not so thick, and said air-flow resistance controlling layer can freely control the air-flow resistance to the desirable value by adjusting the degree to which said pulp fiber used in said pulp fiber layer has been beaten or refined, its mass per unit area, the degree of creping, and the like, according to the desirable thickness of said desired heat insulating and sound absorbing material, so that a heat insulating and sound absorbing material having a light weight and excellent sound absorbing performance can be obtained by positioning said air-flow resistance controlling layer between said air-permeable rigid layer and said air-permeable resilient layer in the present invention.

[EXAMPLE 5]

A friction sheet consisting of a soft type ethylene-vinylacetate copolymer having a thickness of 100$\mu$m was put on the surface of said heat insulating and sound absorbing material sample (B-1) as prepared in EXAMPLE 2, then said friction sheet was adhered to the surface of said sample (B-1) by heating it to 120°C, so as to prepare a heat insulating and sound absorbing material sample (E-1). Said friction sheet is an air-nonpermeable sheet so that the air-permeability of said sample (E-1) being 0 is caused by said friction sheet. The sound absorbing performance of said heat insulating and sound absorbing material sample (E-1) was measured and compared with sample (B-1), and the results are shown in Table 2.

Table 2

| Frequency (%) | Normal incidence sound absorption coefficient (%) | |
|---|---|---|
| | (E-1) | (B-1) |
| 125 | 4 | 4 |
| 250 | 6 | 6 |
| 400 | 10 | 10 |

(continued)

| Frequency (%) | Normal incidence sound absorption coefficient (%) | |
|---|---|---|
| | (E-1) | (B-1) |
| 630 | 19 | 19 |
| 1000 | 34 | 35 |
| 1600 | 58 | 58 |
| 2500 | 82 | 83 |
| 4000 | 98 | 98 |
| 5000 | 97 | 97 |
| 6300 | 95 | 95 |

Referring to Table 2, it is recognized that even in sample (E-1), the air-permeability of which is 0, as a result of said friction sheet, has a sound absorbing performance almost equal to that of sample (B-1) for the sound from said air-permeable rigid layer. Further, said friction sheet improves the adhesion to the car body panel, so as to prevent the slippage of said heat insulating and sound absorbing material from the car body panel, making sample (E-1) useful as a heat insulating and sound absorbing material which can be arranged on the floor of a car.

[EXAMPLE 6]

A air-flow resistance controlling layer was prepared by scattering a polyester hotmelt adhesive powder (particle size: 200 to 300$\mu$m, softening point:100°C) onto one side of said air-flow resistance controlling layer (A) consisting of the pulp fiber layer used in EXAMPLE 1 in an amount of 3g/m$^2$, then putting a spunbond nonwoven fabric consisting of a polyester fiber and having a mass per unit area of 30g/m$^2$ thereon, and then pressing the resulting laminated layer with a heat roll at 200°C, so as to adhere said nonwoven fabric to said pulp fiber layer, and prepare a air-flow resistance controlling layer.
An air-permeable rigid layer was prepared by impregnating a resin mixture solution into a fiber sheet consisting of 20% by mass of a polyester fiber having low melting point (melting point: 160°C) and 80% by mass of a polyester fiber, said fiber sheet having a thickness of 8mm and a mass per unit area of 600g/m$^2$, wherein said resin mixture solution contained 20 parts by mass of a sulfomethylated phenol-alkylresorcin-formaldehyde precondensation polymer water solution(40% by mass) as a thermosetting resin, 1 part by mass of a fluorine group oil and water repellant agent water solution (10% by mass), 2 parts by mass of a carbon black water dispersion (30% by mass), 10 parts by mass of a nitrogen-phosphorus group flame retardant, and 67 parts by mass of water, then squeezing said fiber sheet with a mangle roll, so as to adjust the impregnating amount of said resin mixture solution to be 20g/m$^2$ as a solid, and then heating said fiber sheet at 140°C for 5 minutes, to precure said precondensation polymer, putting said precondensation polymer at B-state.
A fiber sheet consisting of 30% by mass of a polyester fiber having a low melting point (melting point: 130°C), and 70% by mass of a polyester fiber, having a thickness of 10mm, with a mass per unit area of 800g/m2 and a density of 80kg/m$^2$, was used as an air-permeable resilient layer.
Said air-flow resistance controlling layer was then put between said air-permeable rigid layer and said air-permeable resilient layer, with a polyamide cobweb shaped hotmelt adhesive layer having a melting point of 130°C being put between said air-flow resistance controlling layer and said air-permeable rigid layer, and between said air-permeable resilient layer and said air-flow resistance controlling layer. The resulting laminated material was then suction heated in a heating oven at 180°C to cure completely said precondensation polymer to its B-stage in said air-permeable rigid layer and to adhere said air-permeable rigid layer, said air-flow resistance controlling layer, and said air-permeable resilient layer to each other, so as to prepare a heat insulating and sound absorbing material. The flexural strength of said air-permeable rigid layer after curing was 3.17N/25mm with a the air-flow resistance of 0.44 kPa·s/m.
The resulting heat insulating and sound absorbing material has an excellent sound absorbing performance and is useful for the heat insulating and sound absorbing structure of a car body panel.

[EXAMPLE 7]

A air-permeable rigid layer was prepared by heating a web containing 30% by mass of a polyester fiber having a low melting point (melting point: 130°C) and 70% by mass of a polyester fiber at 180°C so as to melt said low melting point polyester fiber, after which said heated web was then cooled. The resulting air-permeable rigid layer had a thickness of 10mm, mass per unit area of 900g/m$^2$, flexural strength of 0.92N/25mm and a air-flow resistance 0.61 kPa·s/m.

Next, a web consisting of 20% by mass of a polyester fiber having a low melting point (melting point: 110°C) and 80% by mass of a polyester fiber was heated at 180°C to melt said low melting point polyester fiber, after which said heated web was then cooled so as to prepare an air-permeable resilient layer having a thickness of 15mm and mass per unit area of 400g/m$^2$.

Further, a conifer pulp as a woody pulp was refined with a discrefiner to a refining degree of 560ml as Canadian Standard Freeness (CFS) provided by JIS P8121-1994-4, and said refined pulp was papered in a usual way so as to prepare a air-flow resistance controlling layer consisting of a pulp fiber layer having a creping degree of 25%, a mass per unit area of 12g/m$^2$, thickness of 0.12mm and a air-flow resistance of 0.86 kPa·s/m. Still further, a carpet, as an air-permeable decorative layer was prepared by tufting nylon piles to a polyester fiber nonwoven fabric, and then coating a SBR latex onto the backside of said tufted polyester nonwoven fabric as a backing treatment.

The resulting layers were then piled in order from the top, said air-permeable decorative layer/air-pcrmeable rigid layer/air-flow resistance controlling layer/said air-permeable resilient layer, wherein a polyester cobweb shaped hotmelt adhesive layer having a melting point of 110°C was put between said air-permeable decorative layer and air-permeable rigid layer, and said air-permeable rigid layer and said air-flow resistance controlling layer, and air-flow resistance controlling layer and air-permeable resilient layer respectively, and the resulting piled layers were suction heated at 130°C, and said heated piled layers were cooled so as to prepare a heat insulating and sound absorbing material having a predetermined shape. The resulting heat insulating and sound absorbing material has high rigidity, molded shape retentivity and an excellent heat-insulating property and sound absorbing performance, being useful for the heat insulating and sound absorbing structure of a car.

[COMPARISON 5]

An air-flow resistance controlling layer sample was prepared in the same manner as in sample (D) of EXAMPLE 4 with the exception that woody pulp having a creping degree of 8% (<10%) was used, said sample having a high air-flow resistance of 5.8 kPa·s/m.

A heat insulating and sound absorbing material sample was prepared in the same manner as in the sample of EXAMPLE 4 with the exception that said sample having a high air-flow resistance was used. The resulting sample had a sound absorbing rate of below 40% in a frequency range of above 2000Hz, and had a worse sound absorbing performance than that of said heat insulating and sound absorbing material sample of EXAMPLE 4.

[COMPARISON 6]

A air-flow resistance controlling layer sample was prepared in the same manner as in sample (D) with the exception that woody pulp having a creping degree 55% (>50%) was used, and that said sample had a low air-flow resistance of 0.04 kPa·s/m. A heat insulating and sound absorbing material sample was prepared in the same manner as in the sample of EXAMPLE 4 with the exception that said sample having a low air-flow resistance was used. The resulting sample had the highest value of the sound absorption to 4000Hz, and this value is about 60% in the case of sample of EXAMPLE 4, and had a worse sound absorbing performance than that of said heat insulating and sound absorbing material sample of EXAMPLE 4.

[COMAPARISON 7]

An air-flow resistance controlling layer sample was prepared in the same manner as in sample (D) of EXAMPLE 4 with the exception that the mass per unit area of said sample was set to be 8g/m$^2$ (<10g/m$^2$), and that the resulting air-flow resistance of said sample became 0.04 kPa·s/m (<0.07 kPa·s/m), with the thickness of said sample being set to be 0.04mm. The resulting sample had inferior strength as compared with sample (D) of EXAMPLE 4, and a heat insulating and sound absorbing material sample using said air-flow resistance controlling layer sample had a sound absorbing rate of below 40% in a frequency range higher than 2000Hz, and had a worse sound absorbing performance than said heat insulating and sound absorbing material of the sample of EXAMPLE 4.

[COMPARISON 8]

A air-flow resistance controlling layer sample was prepared in the same manner as in sample (D) of EXAMPLE 4 with the exception that the mass per unit area was set to be 55g/m$^2$ (>50g/m$^2$) and that said sample had a air-flow resistance 8.79 kPa·s/m (>3.00 kPa·s/m), with the thickness being set to be 0.32mm. A heat insulating and sound absorbing material sample was prepared in the same manner as in EXAMPLE 4 with the exception that said air-flow resistance controlling layer sample having a mass per unit of 55g/m$^2$ was used. The resulting sample had a sound absorbing rate of 65% at the frequency 1600Hz, but only 30 to 20% in the range higher than 160Hz, and said sample had a worse sound absorbing performance than said heat insulating and sound absorbing material sample of EXAMPLE 4.

[COMPARISON 9]

An air-flow resistance controlling layer sample was prepared in the same manner as in sample A of EXAMPLE 1 with the exception that a woody pulp having a refining degree of 320ml (CSF) (<350ml (CSF)) was used as the material for said air-flow resistance controlling layer sample. The resulting air-flow resistance controlling layer sample had a high air-flow resistance 7.9 kPa·s/m, and a heat insulating and sound absorbing material sample using said air-flow resistance controlling layer sample having a high air-flow resistance and prepared in the same manner as in EXAMPLE 1, had the sound absorbing rate of below 30% in a frequency range higher than 2000Hz, and said sample had inferior sound absorbing performance to said heat insulating and sound absorbing material sample of EXAMPLE 1.

[COMAPARISON 10]

An air-flow resistance controlling layer sample was prepared in the same manner as in EXAMPLE 4 with the exception that a woody pulp having a refining degree of 680ml (CSF) (>650ml (CSF)) was used as the material for said air-flow resistance controlling layer sample. The resulting air-flow resistance controlling layer sample had a low air-flow resistance of 0.02 kPa·s/m, and a heat insulating and sound absorbing material sample using said air-flow resistance controlling layer sample having a low air-flow resistance and prepared in the same manner as in EXAMPLE 4, had inferior sound absorbing performance to said heat insulating and sound absorbing material sample of EXAMPLE 4.

POSSIBILITY OF INDUSTRIAL USE

Said heat insulating and sound absorbing material of the present invention has a very light weight, and excellent heat insulating and sound absorbing performance, so that said heat insulating and sound absorbing material is useful as flooring, head lining, door trim and the like for a car. Accordingly, the present invention is possible for industrial use.

EXPLANATION OF CODES

| | |
|---|---|
| 1, 11, 21, 31: | Heat insulating and sound absorbing material |
| 2: | Air-permeable rigid layer |
| 3: | Air-permeable resilient layer |
| 4, 14: | Air-flow resistance controlling layer |
| 4a: | Pulp fiber layer |
| 4b | Nonwoven fabric |
| 5: | Air-permeable decorative layer (carpet) |
| 6: | Car body panel |
| 7: | Friction sheet |
| 8: | Carrier layer |
| 15: | Air-permeable decorative layer (surface layer material) |

**Claims**

1. A heat insulating and sound absorbing material which comes into contact with a car body panel; having an air-permeable rigid layer, and an air-permeable resilient layer, between which is an air-flow resistance controlling layer, consisting of a pulp fiber layer, or a laminated layer of said pulp fiber layer and nonwoven fabric, wherein said air-permeable rigid layer consists of a fiber layer using partially or wholly as a fiber a thermoplastic fiber having a low melting point of below 180 °C, each pulp fiber having a large number of open surface micropores, said pulp fiber layer being a creped paper, the degree of creping being in the range of between 10 and 50%, and said pulp fiber layer having a mass per unit area in the range of between 10 and 50g/m$^2$, a thickness in the range of between 0.08 and 0.30mm, and a air-flow resistance in the range of between 0.07 and 3.00kPa·s/m, and said air-permeable rigid layer has a thickness in the range of between 3.0 and 10.0mm and an air-flow resistance in the range of between 0.20 and 3.00 kPa·s/m and said air-permeable resilient layer has a thickness in the range of between 5 and 20mm, a mass per unit area in the range of between 0.2 and 2.0 kg/m$^2$ and an air flow resistance in the range of between 0.20 and 3.00 kPa·s/m

**characterized in that**:

said pulp fiber contains at least 90% by mass of porous pulp fiber which are beaten or refined to a degree of beating or refining in the range of between 350 and 650 ml as Canadian Standard Freeness (CSF) provided in JIS P8121 1995.4;

said air-permeable rigid layer has a mass per unit area in the range of between 0.3 and 2.0kg/m$^2$ and a flexural strength in the range of between 0.05 and 5.00N/25mm; and

said air-permeable resilient layer has a density below 400kg/m$^3$.

2. A heat insulating and sound absorbing material in accordance with Claim 1, wherein an air-permeable decorative layer is further set on said air-permeable rigid layer.

3. A heat insulating and sound absorbing material in accordance with any of Claims 1 or 2, wherein the surface of said air-permeable resilient layer which comes into contact with said car body panel is set to be flat and smooth.

4. A heat insulating and sound absorbing material in accordance with any of Claims 1 to 3, wherein the surface of said air-permeable resilient layer which comes into contact with said car body panel is covered with a friction sheet.

5. A heat insulating and sound absorbing structure **characterized by** said heat insulating and sound absorbing material of any of claims 1 to 4, coming into contact with said car body panel.

**Patentansprüche**

1. Ein wärmeisolierendes und schallabsorbierendes Material, das mit einem Fahrzeugkarosserieteil in Kontakt kommt; mit einer luftdurchlässigen starren Schicht und einer luftdurchlässigen elastischen Schicht, zwischen denen eine Luftströmungswiderstand-kontrollierende Schicht, bestehend aus einer Zellstofffaserschicht oder einer laminierten Schicht der Zellstofffaserschicht und Vliesstoff liegt, wobei die luftdurchlässige starre Schicht aus einer Faserschicht besteht, die teilweise oder vollständig eine thermoplastische Faser mit einem niedrigen Schmelzpunkt von unter 180 °C als eine Faser verwendet, wobei jede Zellstofffaser eine große Anzahl an offenen Oberflächenmikroporen aufweist, wobei die Zellstofffaserschicht ein Krepppapier ist, wobei der Kreppungsgrad im Bereich zwischen 10 und 50% liegt, und die Zellstofffaserschicht eine Masse pro Flächeneinheit im Bereich zwischen 10 und 50g/m$^2$, eine Dicke im Bereich zwischen 0,08 und 0,30mm und einen Luftströmungswiderstand im Bereich zwischen 0,07 und 3,00kPa·s/m aufweist, und wobei die luftdurchlässige starre Schicht eine Dicke im Bereich zwischen 3,0 und 10,0mm und einen Luftströmungswiderstand im Bereich zwischen 0,20 und 3,00kPa·s/m aufweist, und wobei die luftdurchlässige elastische Schicht eine Dicke im Bereich zwischen 5 und 20mm, eine Masse pro Flächeneinheit im Bereich zwischen 0,2 und 2,0 kg/m$^2$ und einen Luftströmungswiderstand im Bereich zwischen 0,20 und 3,00kPa·s/m aufweist,

**dadurch gekennzeichnet, dass**:

die Zellstofffaser mindestens 90 Massen-% an poröser Zellstofffaser enthält, die bis zu einem Mahl- oder Refinermahlgrad im Bereich zwischen 350 und 650ml als Canadian Standard Freeness (CSF) wie in JIS P8121 1995.4 vorgesehen, gemahlen oder im Refiner behandelt sind;

die luftdurchlässige starre Schicht eine Masse pro Flächeneinheit im Bereich zwischen 0,3 und 2,0kg/m$^2$ und eine Biegefestigkeit im Bereich zwischen 0,05 und 5,00N/25mm aufweist; und

die luftdurchlässige elastische Schicht eine Dichte unter 400kg/m$^3$ aufweist.

2. Ein wärmeisolierendes und schallabsorbierendes Material gemäß Anspruch 1, wobei zusätzlich eine luftdurchlässige Dekorschicht auf die luftdurchlässige starre Schicht aufgebracht ist.

3. Ein wärmeisolierendes und schallabsorbierendes Material gemäß einem der Ansprüche 1 oder 2, wobei die Oberfläche der luftdurchlässigen elastischen Schicht, die mit dem Fahrzeugkarosserieteil in Kontakt kommt, flach und glatt ausgeführt ist.

4. Ein wärmeisolierendes und schallabsorbierendes Material gemäß einem der Ansprüche 1 bis 3, wobei die Oberfläche der luftdurchlässigen elastischen Schicht, die mit dem Fahrzeugkarosserieteil in Kontakt kommt, mit einer Reibungsfolie bedeckt ist.

**5.** Eine wärmeisolierende und schallabsorbierende Struktur, **gekennzeichnet durch** das wärmeisolierende und schallabsorbierende Material gemäß einem der Ansprüche 1 bis 4, das mit dem Fahrzeugkarosserieteil in Kontakt kommt.

## Revendications

**1.** Matériau d'isolation thermique et d'absorption sonore qui entre en contact avec un panneau de carrosserie de voiture ; ayant une couche rigide perméable à l'air, et une couche élastique perméable à l'air, entre lesquelles est située une couche de régulation de résistance à l'écoulement d'air, constituée d'une couche de fibres de pâte à papier, ou une couche stratifiée de ladite couche de fibres de pâte à papier et de textile non-tissé, dans lequel ladite couche rigide perméable à l'air est constituée d'une couche de fibres utilisant partiellement ou totalement en tant que fibre une fibre thermoplastique ayant un point de fusion bas inférieur à 180 °C, chaque fibre de pâte à papier ayant un grand nombre de micropores de surface ouverts, ladite couche de fibres de pâte à papier étant un papier crêpé, le degré de crêpage étant dans la plage comprise entre 10 et 50 %, et ladite couche de fibres de pâte à papier ayant une masse par unité de surface dans la plage comprise entre 10 et 50 g/m$^2$, une épaisseur dans la plage comprise entre 0,08 et 0,30 mm, et une résistance à l'écoulement d'air dans la plage comprise entre 0,07 et 3,00 kPa·s/m, et ladite couche rigide perméable à l'air a une épaisseur dans la plage comprise entre 3,0 et 10,0 mm et une résistance à l'écoulement d'air dans la plage comprise entre 0,20 et 3,00 kPa.s/m et ladite couche élastique perméable à l'air a une épaisseur dans la plage comprise entre 5 et 20 mm, une masse par unité de surface dans la plage comprise entre 0,2 et 2,0 kg/m$^2$ et une résistance à l'écoulement d'air dans la plage comprise entre 0,20 et 3,00 kPa.s/m,
**caractérisé en ce que** :

lesdites fibres de pâte à papier contient au moins 90 % en masse de fibres de pâte à papier poreuses qui sont battues ou affinées à un degré de battage ou d'affinage dans la plage comprise entre 350 et 650 ml en CSF (Canadian Standard Freeness) décrit dans JIS P8121 1995.4 ;
ladite couche rigide perméable à l'air a une masse par unité de surface dans la plage comprise entre 0,3 et 2,0 kg/m$^2$ et une résistance à la flexion dans la plage comprise entre 0,05 et 5,00 N/25 mm ; et
ladite couche élastique perméable à l'air a une masse volumique inférieure à 400 kg/m$^3$.

**2.** Matériau d'isolation thermique et d'absorption sonore selon la revendication 1, dans lequel une couche décorative perméable à l'air est en outre fixée sur ladite couche rigide perméable à l'air.

**3.** Matériau d'isolation thermique et d'absorption sonore selon l'une quelconque des revendications 1 ou 2, dans lequel la surface de ladite couche élastique perméable à l'air qui entre en contact avec ledit panneau de carrosserie de voiture est définie de manière à être plate et lisse.

**4.** Matériau d'isolation thermique et d'absorption sonore selon l'une quelconque des revendications 1 à 3, dans lequel la surface de ladite couche élastique perméable à l'air qui entre en contact avec ledit panneau de carrosserie de voiture est recouvert d'une feuille de frottement.

**5.** Structure d'isolation thermique et d'absorption sonore **caractérisée par** ledit matériau d'isolation thermique et d'absorption sonore de l'une quelconque des revendications 1 à 4, entrant en contact avec ledit panneau de carrosserie de voiture.

Fig. 1

Fig. 2

Fig. 3

Fig. 4

Fig. 5

Fig. 6

Fig. 7

Fig. 8

Fig. 9

Fig. 10

**EP 2 363 325 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009214871 A
- JP 2006069256 A

- JP 10254452 A